# EUROPÄISCHE PATENTANMELDUNG

(11) **EP 1 529 700 A1**
(43) Veröffentlichungstag der Anmeldung: **11.05.2005**
(21) Anmeldenummer: 04025736.2
(22) Anmeldetag: 29.10.2004
(51) Int. Cl.: B60S 1/04

(54) **Scheibenwischeranordnung mit einem Scheibenwischersystem und einer Aufnahmeeinheit**

(30) Priorität: 08.11.2003 DE 10352239
(71) Anmelder: DaimlerChrysler AG, 70567 Stuttgart (DE)
(72) Erfinder: Dahm, Horst, 75382 Althengstett (DE); Ganser, Martin, 71263 Weil der Stadt (DE); Gommel, Gerald, 71735 Eberdingen (DE); Steinhorst, Ulrich, 71263 Weil der Stadt (DE)

(57) **Zusammenfassung**

Die Erfindung betrifft eine Scheibenwischeranordnung mit einem Scheibenwischersystem, das ein Wischergestänge, mindestens eine mit dem Wischergestänge verbundene Wischerachse sowie mindestens ein die Wischerachse aufnehmendes Wischerlager aufweist, sowie einer Aufnahmeeinheit für das Scheibenwischersystem, wobei das Scheibenwischersystem verschiebbar in der Aufnahmeeinheit angeordnet ist. Um eine Scheibenwischeranordnung zu schaffen, die im Falle eines Unfalls ausreichend Sicherheit für einen Fußgänger bietet und gleichzeitig wenig Bauraum beansprucht, wird vorgeschlagen, die Aufnahmeeinheit mit einem mindestens eine Funktionseinheit umfassenden Gehäuse zu verbinden und Aufnahmeeinheit und Gehäuse so auszuführen, dass sie ein Verschieben des Scheibenwischersystems zulassen.

## Beschreibung

Die Erfindung betrifft eine Scheibenwischeranordnung mit einem Scheibenwischersystem und einer Aufnahmeeinheit gemäß dem Oberbegriff des Patentanspruchs 1.

Es gibt Einrichtungen an einer Fahrzeugkarosserie, die bei einem Unfall mit einem Fußgänger ein erhöhtes Verletzungsrisiko darstellen. Dazu gehören beispielsweise Scheibenwischersysteme. Diese werden üblicherweise im Bereich einer Scheibenwischerachse an der Karosserie gehaltert. Es ist bekannt, die Wischerachse dabei so zu lagern, dass sie bei einer axialen Stoßbeanspruchung bei einem Verkehrsunfall durch eine der in diesen involvierten Person nachgibt und in ihrer Lagerung axial verschoben wird. Diese Maßnahme führt zu einer Verringerung der Verletzungsgefahr beim Aufprall der jeweiligen Person auf ein Scheibenwischersystem.

In der DE 199 03 140 A1 wird eine Scheibenwischeranordnung beschrieben, die ein Scheibenwischersystem und eine Aufnahmeeinheit für das Scheibenwischersystem aufweist. Das Scheibenwischersystem besteht u. a. aus einem Wischergestänge, welches eine Verbindung zwischen einer Wischerachse und einem Antriebselement darstellt. Weiterhin weist das Scheibenwischersystem ein Wischerlager zur Aufnahme der Wischerachse auf. Das Wischerlager ist in eine Aufnahmeeinheit für das Scheibenwischersystem integriert. Die Aufnahmeeinheit ist fahrzeugfest angeordnet. Sie ist so gestaltet, dass sie ein axiales Verschieben der Wischerachse zulässt, wodurch gewährleistet wird, dass das gesamte Scheibenwischersystem verschiebbar angeordnet ist. Um die axiale Verschiebbarkeit zu gewährleisten, muss zwischen dem Scheibenwischersystem und den zum Scheibenwischersystem benachbarten Fahrzeugteilen ein Abstand eingehalten werden, der im Falle des Verschiebens des Scheibenwischersystems als Verschiebeweg genutzt werden kann.

Der vorliegenden Erfindung liegt die Aufgabe zugrunde, eine Scheibenwischeranordnung mit einem Scheibenwischersystem und einer Aufnahmeeinheit zu schaffen, die im Falle eines Unfalls ausreichend Sicherheit für einen Fußgänger bietet und gleichzeitig wenig Bauraum beansprucht.

Diese Aufgabe wird durch eine Scheibenwischeranordnung mit einem Scheibenwischersystem und einer Aufnahmeeinheit mit den Merkmalen des Patentanspruchs 1 gelöst.

Die erfindungsgemäße Lösung zeichnet sich demnach dadurch aus, dass die erfindungsgemäße Aufnahmeeinheit für das Scheibenwischersystem mit einem Gehäuse zusammenwirkt, welches mindestens eine Funktionseinheit umfasst. Aufnahmeeinheit und Gehäuse sind dabei so ausgeführt und aufeinander abgestimmt, dass sie ein Verschieben des Scheibenwischersystems zulassen. Mit anderen Worten ermöglichen Aufnahmeeinheit und Gehäuse ein axiales Verschieben der Wischerachsen und somit des gesamten Scheibenwischersystems. Aufnahmeeinheit und Gehäuse sind konstruktiv so gestaltet, dass jederzeit ein Verschiebeweg für die Wischerachsen innerhalb der aus Gehäuse und Aufnahmeeinheit bestehenden Baueinheit besteht.

Wenn im Zusammenhang mit der Erfindung von Funktionseinheit die Rede ist, so sind damit Bauelemente gemeint, die im Zusammenhang mit einer Scheibenwischeranordnung eine bestimmte Funktion übernehmen. Funktionseinheiten können beispielsweise ein Wischwasserbehälter, ein Umluftkasten oder eine Frischluftansaugung sein. Es ist denkbar, dass das Gehäuse mindestens eine dieser Funktionseinheiten umfasst. Ebenso ist es denkbar, dass mehrere solcher Funktionseinheiten in das Gehäuse integriert sind. Die einzelnen Funktionseinheiten sind dabei so ausgeführt, dass sie den erfindungsgemäßen Grundgedanken unterstützen und ein Verschieben des Scheibenwischersystems zulassen.

Gemäß einer Ausführungsform ist die Aufnahmeeinheit als eine deckelartige Struktur ausgeführt. Das bringt den Vorteil mit sich, dass die Aufnahmeeinheit gleichzeitig zwei Funktionen erfüllt. Zum einen dient sie - wie der Name sagt - als Aufnahmeeinheit für ein Scheibenwischersystem. Gleichzeitig kann sie verwendet werden, um das Gehäuse nach oben hin abzuschließen. Dabei ist es denkbar, die Aufnahmeeinheit an ihrer Oberfläche derart zu gestalten, dass sie als von außen sichtbare Fläche dienen kann. Sie kann beispielsweise zwischen Windschutzscheibe und Motorhaube als Abdeckung für die gesamte Scheibenwischeranlage mit darunter angeordneten Funktionseinheiten dienen.

Weiterhin ist es denkbar, in die deckelartige Struktur eine Tragstruktur einzubringen. Die Tragstruktur sorgt dafür, dass die Aufnahmeeinheit ausreichende Stabilität besitzt, um ein Wischersystem aufzunehmen und zu lagern. Das ist insbesondere dann wichtig, wenn die Aufnahmeeinheit von außen sichtbar ist und dabei evtl. von außen aufgebrachten Belastungen standhalten muss. Gleichzeitig sorgt die Tragstruktur für eine ausreichende Stabilität der Aufnahmeeinheit im Falle eines Unfalls und im Falle eines Verschiebens des Scheibenwischersystems relativ zur Aufnahmeeinheit.

Die Aufnahmeeinheit kann mindestens eine Ausnehmung zur Aufnahme eines Wischerlagers aufweisen. Weiterhin kann vorgesehen sein, dass die Wischerachse verschiebbar in dem Wischerlager angeordnet ist. Das Integrieren der Wischerlager in die Aufnahmeeinheit bringt den Vorteil mit, dass keine zusätzlichen Anbauteile für die Aufnahme der Wischerlager erforderlich sind. Dadurch wird ein modularer Aufbau der Scheibenwischeranordnung unterstützt, der den Vorteil mit sich bringt, das Gesamtsystem vorzumontieren und als eine Einheit am Band in das Fahrzeug einzubringen.

Es ist denkbar, das Gehäuse deformierbar auszuführen. Dann ist es möglich, dass das Scheibenwischersystem beim Verschieben relativ zur Aufnahmeeinheit in das Gehäuse eindringen und dieses dabei deformieren kann. Ebenso ist es denkbar, dass bei der Deformation des Gehäuses Energie absorbiert wird. Die deformierbare Ausgestaltung des Gehäuses bringt den Vorteil mit sich, dass - im Gegensatz zum Stand der Technik - auch der Bauraum direkt unterhalb des Scheibenwischersystems benutzt werden kann und nicht freigehalten werden muss. Trotz der Nutzung des Bauraums ist durch die erfindungsgemäße Lösung gewährleistet, dass ein Verschieben des Scheibenwischersystems möglich ist. Ebenso ist es denkbar, das Gehäuse so groß auszuführen, dass es das Scheibenwischersystem, wenn dieses relativ zur Aufnahmeeinheit verschoben wird, komplett aufnehmen kann. In diesem Fall muss das Gehäuse nicht deformierbar ausgeführt werden. Es ist denkbar, zusätzliche Elemente zu integrieren, die während des Verschiebens des Scheibenwischersystems Energie absorbieren. Gängige Energieabsorptionselemente sind beispielsweise sich verformende Drähte oder Blechstreifen.
Wenn in das Gehäuse eine Frischluftansaugung integriert ist, ist es denkbar diese deformierbar auszuführen. Das gleiche gilt für alle anderen Funktionseinheiten, die das Gehäuse umfasst.

Gemäß einer weiteren Ausführungsform können Aufnahmeeinheit und Gehäuse einteilig ausgeführt werden. Eine einteilige Ausführung der beiden Elemente hat den Vorteil, dass weniger Elemente hergestellt und montiert werden müssen, wodurch sich sowohl der Herstellungs- als auch der Montageaufwand erheblich reduziert. Eine Reduzierung dieses Aufwandes bringt insbesondere in der Serienfertigung erhebliche Vorteile mit sich.

Die Aufnahmeeinheit kann in das Gehäuse eingeformt sein. Auf diese Weise kann das Gehäuse in einem Arbeitsschritt, beispielsweise mittels Spritzgussverfahren, hergestellt werden. Es ergeben sich die zuvor im Zusammenhang mit der Einteiligkeit von Aufnahmeeinheit und Gehäuse beschriebenen Vorteile.

Die Aufnahmeeinheit kann einen Lagerbereich sowie einen Deformationsbereich aufweisen. Der Lagerbereich kann zur Aufnahme, beispielsweise des Wischergestänges, dienen. Es ist jedoch auch denkbar, dass der Lagerbereich andere Teile des Scheibenwischersystems, wie beispielsweise die Wischerachse, aufnimmt. Lagerbereich und Deformationsbereich der Aufnahmeeinheit müssen so zueinander angeordnet sein, dass beim Verschieben des Scheibenwischersystems ein Überführen von Elementen des Scheibenwischersystems aus dem Lagerbereich in den Deformationsbereich überführt werden kann. Mit anderen Worten sind die Aufnahmeeinheit bzw. das Gehäuse so ausgeführt, dass das Scheibenwischersystem beim Verschieben innerhalb des Gehäuses verschoben werden kann. Der Deformationsbereich der Aufnahmeeinheit kann dabei so ausgeführt werden, dass er beim Überführen von Teilen des Scheibenwischersystems von dem Lagerbereich in den Deformationsbereich Energie absorbiert. Das kann beispielsweise dadurch geschehen, dass der Deformationsbereich deformierbar ausgestaltet ist, so dass beim Überführen eine Deformation des Deformationsbereiches unter Aufnahme von Energie erfolgen kann.

Bevorzugt sind bei allen zuvor beschriebenen Ausführungsbeispielen die Mittel zur Energieabsorption so ausgestaltet, dass über einen definierten Zeitraum ein konstantes Kraftniveau gehalten wird, so dass keine Kraftspitzen entstehen. Dadurch wird die Verletzungsgefahr von an einem Unfall beteiligten Personen erheblich reduziert.

Im Folgenden wird die Erfindung anhand den in der Zeichnung dargestellten Ausführungsbeispielen näher erläutert. Es zeigen:
- Fig. 1: eine dreidimensionale Darstellung einer Scheibenwischeranordnung,
- Fig. 2a,b: eine dreidimensionale Darstellung einer Scheibenwischeranordnung mit einer deckelartigen Aufnahmeeinheit sowie
- Fig. 3a,b: eine dreidimensionale Darstellung einer Scheibenwischeranordnung mit einem die Aufnahmeeinheit umfassenden Gehäuse.

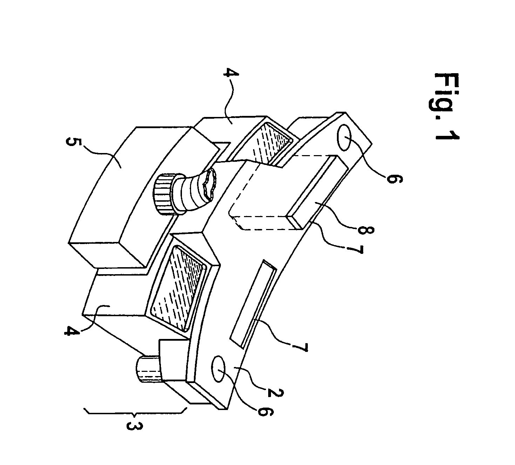

In Figur 1 ist eine Scheibenwischeranordnung 1 dargestellt. Sie weist einen Deckel 2 sowie ein Gehäuse 3 auf. In das Gehäuse 3 sind verschiedene Funktionseinheiten integriert. Eine Funktionseinheit besteht aus einer Frischluftansaugung 4 und eine weitere aus einem Wischwasserbehälter 5. Es können weitere Funktionseinheiten, wie beispielsweise ein Umluftkasten, vorgesehen sein.
Der dargestellte Deckel 2 weist Ausnahmen 6 auf. Die Ausnahmen 6 sind kreisförmig und dienen der Aufnahme von nicht dargestellten Wischerlagern, in denen ebenfalls nicht dargestellte Wischerachsen angeordnet sind. Weiterhin sind in dem Deckel 2 Ausnahmen 7 für Filter 8 für die Luftansaugung vorgesehen. Das ganze System ist symmetrisch ausgeführt, so dass es sowohl für einen Linkslenker als auch für einen Rechtslenker verwendbar ist.

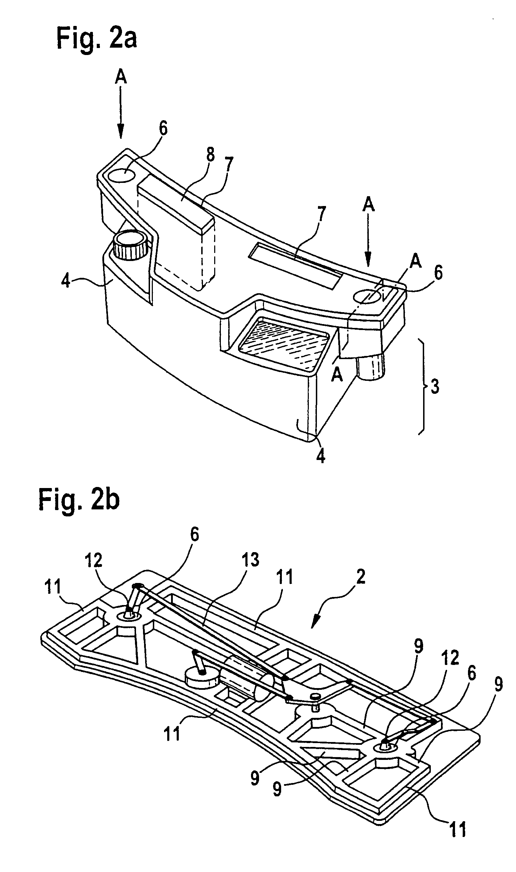

In Figur 2 ist eine der Figur 1 entsprechende Scheibenwischeranordnung 1 mit einem Gehäuse 3 sowie einem Deckel 2 dargestellt.

Das Gehäuse weist wiederum eine Frischluftansaugung 4 auf. Es unterscheidet sich von der in Figur 1 dargestellten Scheibenwischeranordnung dadurch, dass kein Wischwasserbehälter vorgesehen ist.

Der Deckel 2 weist ebenso, wie der in Figur 1 beschriebene Deckel, zwei Ausnahmen 6 für die Aufnahme von Wischerlagern auf. Zudem sind Ausnahmen 7 für die Aufnahme eines Filters 8 vorgesehen.

In Figur 2b ist der Deckel 2 aus der Figur 2a von seiner Unterseite dargestellt. Der in der Darstellung in Richtung des Betrachters weisende Teil des Deckels 2 ist bogenförmig ausgeführt. Er ist damit an eine sich an die Scheibenwischeranordnung 1 anschließende Windschutzscheibe angepasst. Die weitere Form des Deckels 2 ist an das Gehäuse 3 angepasst. Auf der Unterseite des Deckels 2 ist weiterhin eine Tragstruktur 4 zu erkennen. Sie ist einteilig mit dem Deckel 2 ausgeführt. Deckel und Tragstruktur können beispielsweise aus Kunststoff bestehen und in einem Spritzgussverfahren hergestellt werden. Weiterhin sind in Figur 2b die Ausnahmen 6 zur Aufnahme von Wischerlagern zu erkennen. Die Tragstruktur 4 ist so ausgebildet, dass sie insbesondere die Ausnehmungen 6 unterstützt.

Dazu ist die Tragstruktur 4 kreisförmig um die Ausnehmungen 6 herum ausgeführt und mit sternförmig von diesem Kreis abragenden Rippen 9 versehen. Zusätzliche Rippen 11 verlaufen entlang des Randes des Deckels 2. Die Rippen 11 sind dabei an die Form des Deckels 2 angepasst, d. h. wenn der Deckel an seinem Rand bogenförmig gestaltet ist, so ist dies auch die dazugehörige Rippe 11.

In den Ausnehmungen 6 sind Wischerachsen 12 angeordnet. Die Wischerachsen 12 sind mit einem, aus dem Stand der Technik bekannten Gestänge, welches hier nicht näher erläutert werden soll, verbunden. Das Wischergestänge 13 dient dazu, die Wischerachsen 12 mit einer Antriebseinheit zu verbinden.

Im Folgenden wird die Funktionsweise der erfindungsgemäßen Scheibenwischeranordnung im Falle eines Unfalls mit einer Person beschrieben: Im Falle eines Zusammenstoßes mit einer Person, bei dem die Person mit dem Scheibenwischersystem in Kontakt kommt und daraufhin eine, in Richtung der Pfeile A wirkende Kraft in die Scheibenwischerachsen 12 eingeleitet wird, kann das gesamte Scheibenwischersystem in Richtung der Pfeile A verlagert werden. Dabei verschieben sich die Wischerachsen 12 axial in den Ausnehmungen 6. Das Gehäuse 3 ist deformierbar gestaltet und nimmt das Wischersystem, insbesondere das Wischergestänge 13, auf. Durch die verschiebbare Anordnung des Scheibenwischersystems wird die Verletzungsgefahr für mit einem Fahrzeug zusammenstoßende Personen erheblich reduziert. Die erfindungsgemäße Scheibenwischeranordnung stellt eine platzsparende Lösung dar, da der Bauraum unterhalb des Scheibenwischersystems genutzt wird. Die unterhalb des Scheibenwischersystems angeordneten Bauteile sind jedoch so ausgeführt, dass sie ein Verschieben des Scheibenwischersystems ermöglichen.

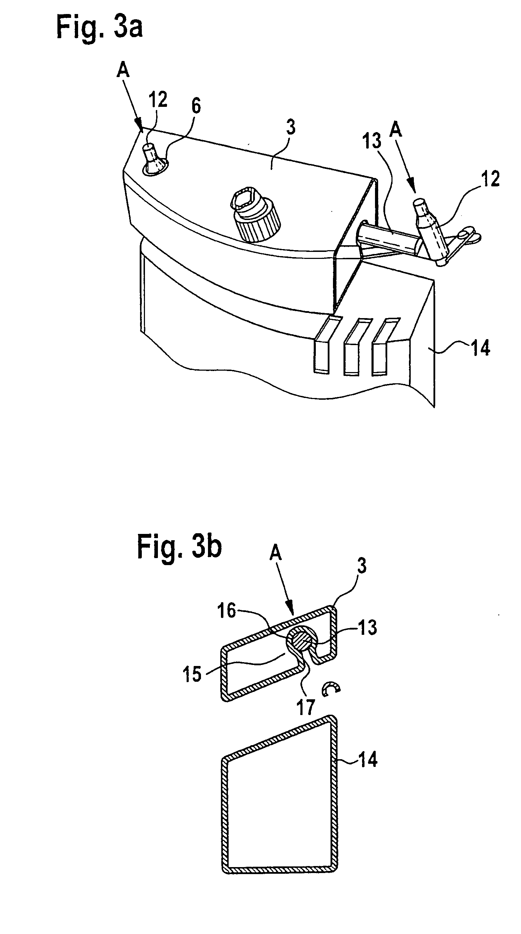

In den Figuren 3a und 3b ist eine weitere Ausführungsform der erfindungsgemäßen Scheibenwischeranordnung dargestellt. Es weist ebenfalls ein Gehäuse 3 auf. Das Gehäuse 3 dient der Aufnahme von Waschwasser. Unterhalb des Gehäuses 3 ist eine weitere Funktionseinheit, nämlich eine Frischluftansaugung 14, dargestellt. In das Gehäuse 3 sind Ausnehmungen 6 eingebracht, die zur Aufnahme von Wischerlagern und darin angeordneten Wischerachsen 12 dienen. Das in Figur 3a und 3b dargestellte Ausführungsbeispiel unterscheidet sich von dem zuvor beschriebenen dadurch, dass die Aufnahmeeinheit in das Gehäuse 3 integriert ist. Die Aufnahmeeinheit besteht hier aus einer schlüssellochförmigen Aufnahme 15 und ist am besten in Figur 3b zu erkennen. Die Aufnahme 15 weist einen Lagerbereich 16 sowie einen Deformationsbereich 17 auf. Der Lagerbereich 16 ist kreisförmig ausgeführt und dient der Aufnahme des Wischergestänges 13. Der Deformationsbereich 17 schließt sich an den Lagerbereich 16 an und ist rechteckig ausgeführt. Das Gehäuse 3, insbesondere in dem Bereich der Aufnahmeeinheit 15, ist deformierbar ausgestaltet.

Im Folgenden wird die Funktionsweise der in den Figuren 3a und 3b dargestellten Wischeranordnung näher erläutert: Wenn eine Aufprallkraft gemäß der Pfeile A auf das Wischersystem einwirkt, die ein vorbestimmtes Kraftmaß überschreitet, wird das Scheibenwischersystem, insbesondere das Gestänge 13, aus dem Lagerbereich 16 der Aufnahmeeinheit 15 herausgedrückt und dabei in den Deformationsbereich 17 überführt. Dabei wird das Gehäuse 3 deformiert. Durch die Deformation des Gehäuses wird Energie absorbiert.

Auch bei diesem Ausführungsbeispiel ergibt sich durch das spezielle Zusammenwirken von Aufnahmeeinheit 15 und Gehäuse 3 die vorteilhafte Wirkung der Erfindung. Es wird ein Verschieben des gesamten Scheibenwischersystems ermöglicht und gleichzeitig der Bauraum unterhalb des Wischersystems ausgenutzt. Beim Verschieben wird zudem noch Energie absorbiert, was sich positiv auf das Verletzungsrisiko von Personen auswirkt.

## Patentansprüche

1. Scheibenwischeranordnung mit
einem Scheibenwischersystem, das ein Wischergestänge, mindestens eine mit dem Wischergestänge verbundene Wischerachse sowie mindestens ein die Wischerachse aufnehmendes Wischerlager aufweist, sowie
einer Aufnahmeeinheit für das Scheibenwischersystem, wobei das Scheibenwischersystem verschiebbar in der Aufnahmeeinheit angeordnet ist,
**dadurch gekennzeichnet,**
**dass** die Aufnahmeeinheit mit einem mindestens eine Funktionseinheit umfassenden Gehäuse verbunden ist und Aufnahmeeinheit und Gehäuse so ausgeführt sind, dass sie ein Verschieben des Scheibenwischersystems zulassen.

2. Scheibenwischeranordnung nach Anspruch 1,
**dadurch gekennzeichnet,**
**dass** die Aufnahmeeinheit eine deckelartige Struktur aufweist.

3. Scheibenwischeranordnung nach Anspruch 2,
**dadurch gekennzeichnet,**
**dass** in die deckelartige Struktur eine Tragstruktur eingebracht ist.

4. Scheibenwischeranordnung nach Anspruch 2 oder 3,
**dadurch gekennzeichnet,**
**dass** die Aufnahmeeinheit mindestens eine Ausnehmung zur Aufnahme des Wischerlagers aufweist.

5. Scheibenwischeranordnung nach Anspruch 4,
**dadurch gekennzeichnet,**
**dass** die Wischerachse verschiebbar in dem Wischerlager angeordnet ist.

6. Scheibenwischeranordnung nach einem der Ansprüche 2 bis 5,
**dadurch gekennzeichnet,**
**dass** das Gehäuse deformierbar ausgeführt ist.

7. Scheibenwischeranordnung nach Anspruch 6,
**dadurch gekennzeichnet,**
**dass** das Gehäuse eine Frischluftansaugung aufweist, die deformierbar ausgeführt ist.

8. Scheibenwischeranordnung nach Anspruch 1,
**dadurch gekennzeichnet,**
**dass** Aufnahmeeinheit und Gehäuse einteilig ausgeführt sind.

9. Scheibenwischeranordnung nach Anspruch 8,
**dadurch gekennzeichnet,**
**dass** die Aufnahmeeinheit in das Gehäuse eingeformt ist.

10. Scheibenwischeranordnung nach Anspruch 8 oder 9,
**dadurch gekennzeichnet,**
**dass** die Aufnahmeeinheit einen Lagerbereich und einen Deformationsbereich aufweist.

11. Scheibenwischeranordnung nach Anspruch 10,
**dadurch gekennzeichnet,**
**dass** der Lagerbereich zur Aufnahme des Wischergestänges dient.

12. Scheibenwischeranordnung nach Anspruch 10 oder 11,
**dadurch gekennzeichnet,**
**dass** das Wischergestänge beim Verschieben des Scheibenwischersystems aus dem Lagerbereich in den Deformationsbereich überführt wird.

13. Scheibenwischeranordnung nach Anspruch 12,
**dadurch gekennzeichnet,**
**dass** der Deformationsbereich so ausgeführt ist, dass beim Überführen von dem Lager- in den Deformationsbereich Energie absorbiert wird.
